# EUROPÄISCHE PATENTSCHRIFT

(11) **EP 0 988 454 B1**
(45) Veröffentlichungstag und Bekanntmachung des Hinweises auf die Patenterteilung: **04.02.2004**
(21) Anmeldenummer: 98936145.6
(22) Anmeldetag: 12.06.1998
(51) Int. Cl.: F15B 15/12, F16J 15/34

(54) **DICHTRING EINES SCHWENKMOTORS**
SEALING RING FOR AN OSCILLATING MOTOR
BAGUE D'ETANCHEITE POUR MOTEUR OSCILLANT

(30) Priorität: 17.06.1997 DE 19725412; 29.09.1997 DE 19742881
(43) Veröffentlichungstag der Anmeldung: 29.03.2000
(73) Patentinhaber: ZF Lemförder Metallwaren AG, 49448 Lemförde (DE)
(72) Erfinder: REICHEL, Klaus, D-19374 Domsühl (DE); BEETZ, Stefan, D-55743 Idar-Oberstein (DE)
(86) Internationale Anmeldenummer: PCT/DE1998/001598
(87) Internationale Veröffentlichungsnummer: WO 1998/058178

(56) Entgegenhaltungen:
- DE-A- 4 443 448
- US-A- 3 128 679
- US-A- 3 195 421
- US-A- 3 426 654

## Beschreibung

Die Erfindung betrifft einen Schwenkmotor nach dem Oberbegriff des Anspruchs 1.
Solche Schwenkmotore werden insbesondere in der Flugund Fahrzeugindustrie eingesetzt.

Ein solcher Schwenkmotor besteht allgemein aus einem Stator mit einem Gehäuse und beidseitigen Deckeln. Im Gehäuse sind ein oder mehrere Statorflügel angeordnet. In den Deckeln ist eine Abtriebswelle gelagert, die mit Rotorflügeln in gleicher Anzahl ausgerüstet ist. Die Statorflügel und die Rotorflügel bilden mehrere volumenveränderliche Kammern, die als Druck- bzw. Ablaufräume ausgebildet sind und demnach Verbindung zu entsprechenden Zulauf- bzw. Ablaufanschlüssen besitzen.
Für die innere Dichtheit sind die Druckräume und die Ablaufräume durch jeweils ein, den Statorflügel bzw. den Rotorflügel umschließenden, Rahmendichtelement voneinander getrennt.
Für die Dichtheit nach außen befinden sich im Bereich der Abtriebsachse zwischen dem Rotor und jedem Deckel jeweils ein ringförmiges Dichtelement, das vorrangig im Deckel angeordnet ist.

In der US 3.195.421 ist nun ein Schwenkmotor beschrieben, der als ringförmiges Dichtelement einen flexiblen Diagonaldichtring zeigt. Dieser flexible Diagonaldichtring ist in einer Ringnut des Deckels eingesetzt, stützt sich an der Wandung der Ringnut ab und ist mit seiner diagonalen Dichtkante entgegen der Druckrichtung auf den umlaufenden Dichtspalt zwischen den Stirnflächen des Deckels und des Rotorflügels ausgerichtet.
Auf Grund der oft wechselnden Relativbewegung zwischen dem im Deckel feststehenden Diagonaldichtring und den Rotorflügeln unterliegt dieser Diagonaldichtring einem hohen Verschleiß. Das führt frühzeitig zu Undichtigkeiten.

Ein Schwenkmotor mit einer ähnlichen Dichtvariante ist aus der US 3.426.654 bekannt, bei dem der Diagonaldichtring über ein Stützelement von einem flexiblen O-Ring vorgespannt ist. Durch eine gezielte Auslegung der auf den Diagonaldichtring wirkenden Kraftkomponenten wird ein Kompromiß zwischen der Dichtigkeit und der Gleiteigenschaft gesucht.
Bei dieser Dichtvariante sind also die Gleit- und Dichteigenschaften nicht optimal. Wegen der auftretenden Leckage macht sich obendrein der Einsatz einer zusätzlichen Zylinderdichtung an den Zapfen des Rotors erforderlich, um ein Austreten des Öles nach außen zu verhindern. Wegen dieser zusätzlichen Zylinderdichtung kommt es aber zu einem Einspannen der Leckage und damit zu einer Druckbelastung des Diagonaldichtringes und auch des Lauflagers im ruhenden Zustand, was äußerst nachteilig für das Anlaufverhalten eines solchen Schwenkmotors ist. Auch das trägt zu einer Verringerung der Lebensdauer bei und grenzt obendrein den Einsatzbereich solcher Schwenkmotore stark ein.

Es ist auch bekannt, an Stelle des Diagonaldichtringes einen Gleitdichtring im Deckel einzusetzen, um die Laufeigenschaften zu verbessern.
Wegen der äußerst geringen Dichtigkeit wird diese Dichtvariante in der Regel abgelehnt.
Außerdem hat der Gleitdichtring ständigen Kontakt mit dem Rahmendichtelement der Rotor- und Statorflügel. Da eine Relativbewegung zwischen dem Gleitdichtring und dem Rahmendichtelement nicht auszuschließen ist, wird das Rahmendichtelement stark beansprucht, was eine kurze Lebensdauer zur Folge hat.

Es besteht daher die Aufgabe, einen radialen Schwenkmotor der vorliegenden Gattung mit statischen Dichtstellen zwischen dem Rotor und den ringförmigen Dichtelementen zu entwickeln.

Diese Aufgabe wird durch die kennzeichnenden Merkmale des Anspruchs 1 gelöst. Zweckdienliche Ausgestaltungen ergeben sich aus den Unteransprüchen 2 bis 10.

Die Erfindung beseitigt die genannten Nachteile aus dem Stand der Technik.
Von besonderem Vorteil ist dabei die hohe Dichtheit der Druckräume nach außen, eine verschleißarme Gestaltung der Dichtelemente und eine gleichzeitig ausgezeichnete Laufruhe des Rotors.
Das ist insbesondere darauf zurückzuführen, daß die Dichtstellen im Bereich der Rotorflügel von den Gleitflächen zwischen dem Rotor und den Deckeln entfernt und in einen Bereich verlegt wird, wo die Dichtstelle nur aus relativ ruhenden Teilen gebildet wird. Damit wurden die den Stand der Technik kennzeichnenden dynamischen Dichtstellen zu einem Anteil von 50% in statische Dichtstellen umgewandelt. Somit wird die Gleitfunktion des Gleitdichtringes am radialen Dichtspalt von der Dichtfunktion des Gleitdichtringes am axialen Dichtspalt räumlich voneinander getrennt, was eine genaue Optimierung auf die speziellen Anforderungen ermöglicht.
Die verbesserten Dichteigenschaften werden aber auch damit begründet, daß der Weichdichtring insbesondere in Form eines Diagonaldichtringes innerhalb des Einbauraumes vom Druck des Leckageöles beaufschlagt und in entgegengesetzten Richtungen gegen Dichtspalte gedrückt wird. Dadurch bleibt die Leckage eingeschlossen und kann nicht mehr über die Spielpassung zwischen dem Lagerzapfen und dem Deckel nach außen dringen, wodurch zusätzliche Hochdruckdichtungen überflüssig werden. Andererseits verbessert der erhöhte Druck auf den Diagonaldichtring das Dichtverhalten am Dichtspalt, der zum Druckraum gerichtet ist.
Die verbesserte Dichteigenschaft wird weiterhin damit begründet, daß der Gleitdichtring über seine gesamte Ringfläche vom Druck belastet wird und zwar vom Druck im Druckraum als auch vom gleichen Druck im Einbauraum des Diagonaldichtringes. Dadurch wird der Gleitdichtring gleichmäßig und verstärkt gegen den Deckel gedrückt.

Wegen der Laufruhe ist es vorteilhaft, der radialen Gleit- und Dichtfläche des Gleitdichtringes eine größere radiale Ausdehnung zu geben als der axialen Ausdehnung des Gleitringes. Das dient auch der speziellen Anpassung an besondere Anwendungsmöglichkeiten.

Vorteilhaft ist auch der Einsatz einer Verdrehsicherung zwischen dem Rotor und dem Gleitdichtring um zu gewährleisten, daß der Gleitdichtring zu keinem anderen Dichtelement, weder zum Rahmendichtelement noch zum Diagonaldichtring eine Relativbewegung ausführt. Damit bleibt die statische Dichtstelle erhalten.
Eine einfache und kostensparende Ausführung ergibt sich, wenn die Verdrehsicherung aus mindestens einer Ausnehmung in Form einer axialen Nut im Gleitdichtring und mindestens einem Mitnehmer am Rotorflügel gebildet wird und beide miteinander im Eingriff stehen.
Als Mitnehmer kann dabei die bereits vorhandene Stirnseite eines der beiden Schenkel oder beide Schenkel des Rotorflügels verwendet werden, wenn dann gleichzeitig die axialen Nuten paarweise ausgeführt werden.
Mit einer solchen Verdrehsicherung ist es auch zweckmäßig, den wenig abgedichteten axialen Dichtspalt mit einem zusätzlichen Weichdichtring zu verschließen. Das erhöht in besonderer Weise die Dichtheit nach außen und sichert gleichzeitig eine hohe Lebenserwartung des Weichdichtringes.

Von Vorteil ist auch, die Stirnflächen der Deckel und des Gehäuses als durchgehende Planflächen auszubilden und die Deckel und das Gehäuse radial durch ein Zentrierelement, beispielsweise einem Spannring, zu fixieren. Dadurch wird eine genauerere Bearbeitung der Stirnflächen und eine bessere Optimierung des radialen Dichtspaltes möglich, was sich wiederum positiv auf die Dichtheit und auf den hydraulischen Wirkungsgrad des Schwenkmotors auswirkt.

Die Erfindung soll nachstehend an Hand eines Ausführungsbeispieles näher erläutert werden.

Dazu zeigen
- Fig. 1:: einen Schwenkmotor im Längsschnitt,

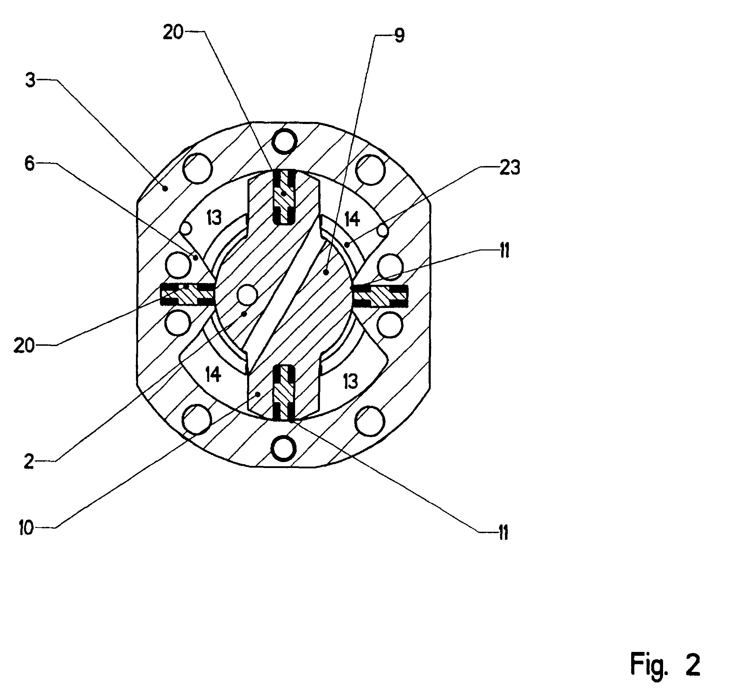

- Fig. 2:: den Schwenkmotor im Querschnitt,

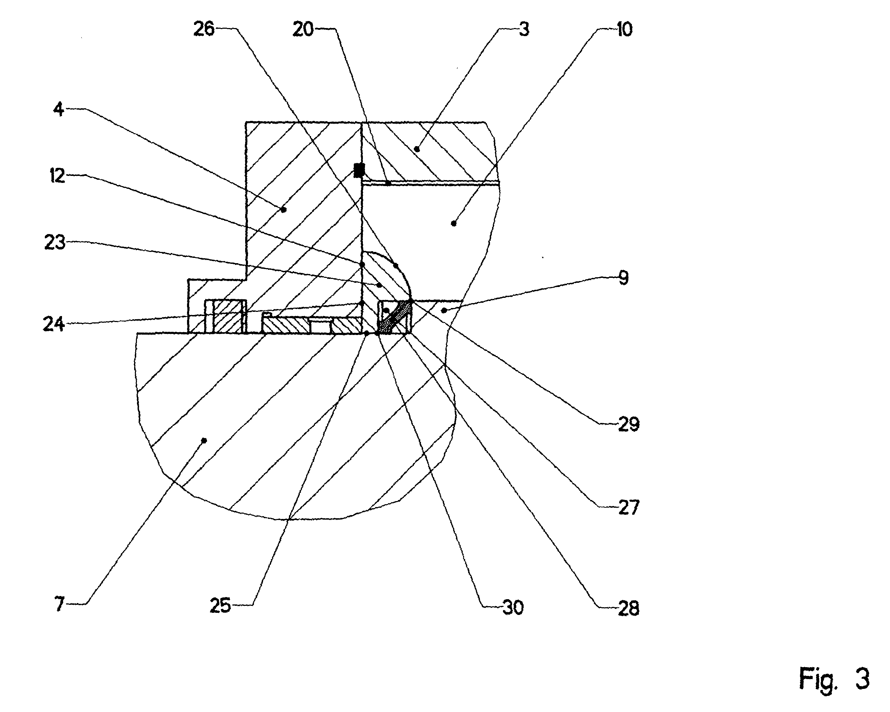

- Fig. 3:: die erfindungsgemäße Dichtung im Querschnitt und
- Fig. 4:: den Rotor des Schwenkmotors in einer perspektivischen Darstellung.

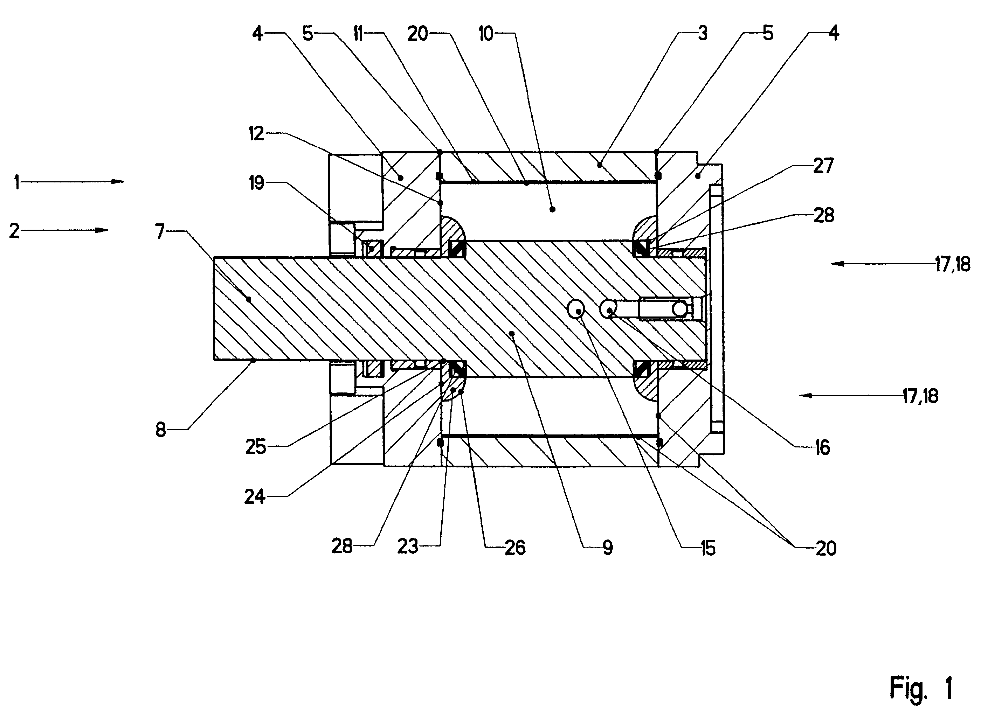

Der radiale Schwenkmotor gemäß der Fig. 1 besteht in der Hauptsache aus einem äußeren Stator 1 und einem inneren Rotor 2. Der Stator 1 setzt sich aus einem Gehäuse 3 und aus an beiden Stirnseiten des Gehäuses 3 angeordneten Deckel 4 zusammen, die über nichtdargestellte Schrauben befestigt sind.
Ein Spannring 5 an jeder Deckelseite übernimmt die Fixierung der radialen Lage zueinander.
Beide Deckel 4 besitzen je eine Lagerbohrung. Im Inneren des Gehäuses 3 befindet sich eine zylindrische Gehäusebohrung, die in der Länge von zwei sich gegenüberliegenden und radial ausgerichteten Statorflügel 6 in zwei gegenüberliegende Freiräume aufgeteilt ist.
Der Rotor 2 besteht dagegen aus einer Abtriebswelle 7 mit beidseitigen Lagerzapfen 8 und einem dazwischenliegenden Zylinderteil 9. Im Bereich dieses Zylinderteils 9 sind zwei gegenüberliegende und radial ausgerichtete Rotorflügel 10 angeordnet. Der Rotor 2 ist in dem Gehäuse 3 des Stators 1 so eingepaßt, daß zwischen dem Kopf des Rotorflügels 10 und der Innenwand des Gehäuses sowie zwischen dem Kopf des Statorflügels 6 und der Umfangsfläche des Zylinderteils 9 jeweils ein axialer Dichtspalt 11 gebildet ist.
Zwischen den Stirnflächen des Rotorflügels 10 und den Stirnflächen des Statorflügels 6 und den beidseitigen Innenflächen der beiden Deckel 4 ergibt sich jeweils ein radialer Dichtspalt 12.
Jeder Rotorflügel 10 teilt daher einen der beiden Freiräume im Gehäuse 3 in einen Druckraum 13 und in einen Ablaufraum 14 auf, sodaß sich zwei gegenüberliegende Druckräume 13 und zwei gegenüberliegende Ablaufräume 14 ergeben. Beide Druckräume 13 und beide Ablaufräume 14 sind durch innere Kanäle 15 bzw. 16 untereinander verbunden, während einer der beiden Druckräume 13 mit einem Zulaufanschluß 17 und einer der beiden Ablaufräume 14 mit einem Ablaufanschluß 18 in Verbindung steht. Zwischen den Deckeln 4 und den jeweiligen Lagerzapfen 8 sowie zwischen den Deckeln 4 und dem Gehäuse 3 sind in üblicher Weise Dichtelemente 19 für die äußere Dichtheit vorgesehen.
Zur Gewährleistung der inneren Dichtheit zwischen den benachbarten Druckräumen 13 und den Ablaufräumen 14 befindet sich auf jedem Rotorflügel 10 und auf jedem Statorflügel 6 im Bereich der axialen und der radialen Dichtspalte 11 und 12 ein Rahmendichtelement 20. Dazu ist jeder Statorflügel 6 und jeder Rotorflügel 10 mit zwei längsverlaufenden Schenkeln 21 versehen, die zwischen sich eine mittige und über die ganze Höhe und über die ganze Länge verlaufende Nut 22 ausbilden. In diese Nut 22 ist das Rahmendichtelement 20 eingepreßt. Damit ist gewährleistet, daß der Rotorflügel 10 am Umfang und an den Stirnseiten eines jeden Rotorflügels 10 gegenüber dem Gehäuse 3 und den Deckeln 4 abgedichtet ist.

Im übergangsbereich vom Lagerzapfen 8 zum Zylinderteil 9 ist ein Gleitdichtring 23 axial verschiebbar auf der Abtriebswelle 7 aufgesetzt, sodaß er mit seiner radialen Gleit- und Dichtfläche in gleitender Weise an der Innenfläche des Deckels 4 anliegt und hier einen radialen Dichtspalt 24 ausbildet. Mit seiner axialen Dichtfläche liegt der Gleitdichtring 23 an der Umfangsfläche der Antriebswelle 7 an und bildet hier einen axialen Dichtspalt 25. Zwischen der innenliegenden Fläche des Gleitdichtringes 23 und dem Rotor- bzw. dem Statorflügel 10 bzw. 6 besteht ein weiterer Dichtspalt 26, der die jeweils benachbarten Druck- und Ablaufräume 13, 14 voneinander trennt und der durch das Rahmendichtelement 20 dichtend verschlossen wird.
Der Gleitdichtring 23 besitzt auf seiner dem Deckel 4 abgewandten Seite eine Ausnehmung, die als Einbauraum 27 für einen Diagonaldichtring 28 ausgelegt ist. Dieser Einbauraum 27 bildet im Zusammenwirken mit einer Durchmesserstufung am Zylinderteil 9 der Abtriebswelle 7 einen ersten Dichtspalt 29, der dem Druckraum 13 zugewandt ist, und einen zweiten Dichtspalt 30, der vom Druckraum 13 abgewandt ist.
Der Diagonaldichtring 28 ist z.B. mit zwei Dichtteilen und mit einem dazwischenliegenden und beweglichen Führungsteil ausgebildet und im Einbauraum 27 so eingepaßt, daß das eine Dichtteil einerseits an der ersten Dichtkante 29 und das andere Dichtteil andererseits an der zweiten Dichtkante 30 anliegt.

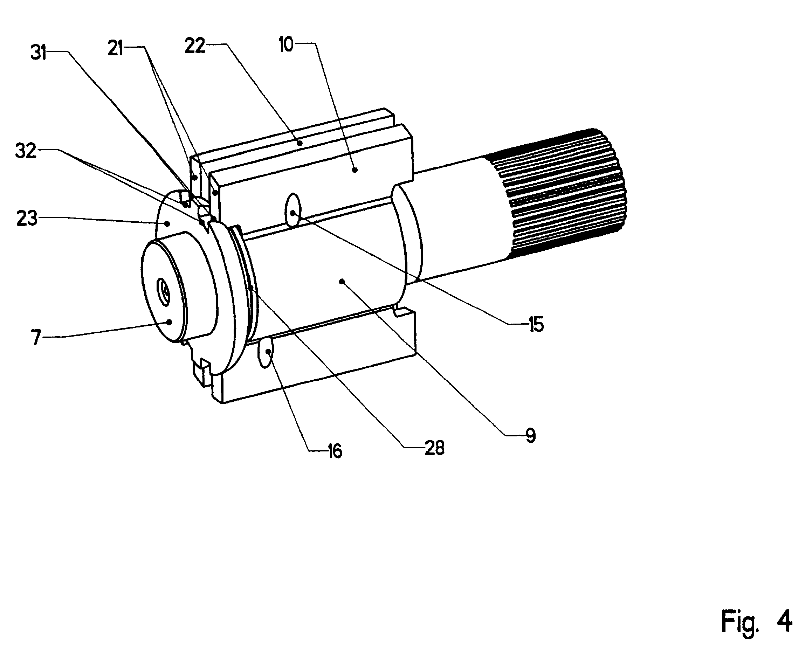

Wie insbesondere die Fig. 4 zeigt, sind der Gleitdichtring 23 und der Rotor 2 weiterhin mit einer Verdrehsicherung ausgerüstet.

Dazu sind jeweils beide Schenkel 21 des Rotorflügels 10, die das Rahmendichtelement 20 einschließen, an ihren-Stirnseiten als Mitnehmer 31 ausgebildet.
Dagegen besitzt der Gleitdichtring 23 am Umfang zwei gegenüberliegende Paare von axialen Nuten 32, wobei jedes Paar von Nuten 32 den beiden Schenkeln 21 eines der Rotorflügel 10 zugeordnet ist. Insofern entpricht der Abstand beider Nuten 32 eines Paares im Gleitdichtring 23 dem Abstand beider Mitnehmer 31 an den Schenkeln 21 des Rotorflügels 10. Ebenso entsprechen die Abmessungen der jeder axialen Nut 32 den Abmessungen des entsprechenden gegenüberliegenden Mitnehmers 31, so daß im montierten Zustand jeder Mitnehmer 31 in eine axiale Nut 32 eingreift.

### Aufstellung der Bezugszeichen

- 1: Stator
- 2: Rotor
- 3: Gehäuse
- 4: Deckel
- 5: Spannring
- 6: Statorflügel
- 7: Abtriebswelle
- 8: Lagerzapfen
- 9: Zylinderteil
- 10: Rotorflügel
- 11: axialer Dichtspalt
- 12: radialer Dichtspalt
- 13: Druckraum
- 14: Ablaufraum
- 15: Kanal
- 16: Kanal
- 17: Zulaufanschluß
- 18: Ablaufanschluß
- 19: äußeres Dichtelement
- 20: Rahmendichtelement
- 21: Schenkel
- 22: Nut
- 23: Gleitdichtring
- 24: radialer Dichtspalt
- 25: axialer Dichtspalt
- 26: Dichtspalt
- 27: Einbauraum
- 28: Diagonaldichtring
- 29: erster Dichtspalt
- 30: zweiter Dichtspalt
- 31: Mitnehmer
- 32: axiale Nut

## Patentansprüche

1. Radialer Schwenkmotor, bestehend
- aus einem Stator (1) mit einem Gehäuse (3) und beidseitigen Deckeln (4), wobei im Gehäuse (3) mindestens ein Statorflügel (6) angeordnet ist und
- aus einem Rotor (2) mit einer in den Deckeln (4) gelagerten Abtriebswelle (7) und mit Rotorflügeln (10) in gleicher Anzahl, wobei
- der Statorflügel (6) und der Rotorflügel (10) in Verbindung mit dem Gehäuse (3), dem Zylinderteil (9) der Antriebswelle (7) und den beiden Deckeln (4) mindestens einen Druckraum (13) und einen Ablaufraum (14) ausbilden und
- der Druckraum (13) und der Ablaufraum (14) nach innen durch einen, in dem Stator- und dem Rotorflügel (10, 6) eingesetzten Rahmendichtelement (20) und
- der Druckraum (13) und der Ablaufraum (14) nach außen und nach innen durch einen Gleitdichtring (23) abgedichtet sind,
**dadurch gekennzeichnet, daß** das ringförmige Dichtelement aus einem Gleitdichtring (23) und einem Weichdichtring besteht, wobei beide nebeneinander auf einer gemeinsamen Achse und der Weichdichtring auf Seiten des Druckraumes (13) und des Ablaufraumes (14) angeordnet sind.

2. Radialer Schwenkmotor nach Anspruch 1,
**dadurch gekennzeichnet, daß** der Weichdichtring ein Diagonaldichtring (28) ist, der mit einem Dichtteil auf einem dem Druckraum (13) zugewandten Dichtspalt (29) und mit dem anderen Dichtteil auf einem dem Druckraum (13) abgewandten Dichtspalt (30) ausgerichtet ist.

3. Radialer Schwenkmotor nach Anspruch 2,
**dadurch gekennzeichnet, daß** der Gleitdichtring (23) eine Ausnehmung besitzt, die als Einbauraum (27) für den Diagonaldichtring (28) ausgebildet ist.

4. Radialer Schwenkmotor nach Anspruch 3,
**dadurch gekennzeichnet, daß** der Gleitdichtring (23) so dimensioniert ist, daß die radiale Ausdehnung der Gleitund Dichtfläche am Dichtspalt (24) größer als die axiale Ausdehnung der Dichtfläche am Dichtspalt (25) ist.

5. Radialer Schwenkmotor nach Anspruch 4,
**dadurch gekennzeichnet, daß** der Gleitdichtring (23) und der Rotor (2) eine gemeinsame Verdrehsicherung besitzen.

6. Radialer Schwenkmotor nach Anspruch 5,
**dadurch gekennzeichnet, daß** die Verdrehsicherung aus mindestens einer Ausnehmung im Gleitdichtring (23) und aus einem Mitnehmer (31) am Rotorflügel (10) gebildet wird und die Ausnehmung und der Mitnehmer (31) miteinander im Eingriff stehen.

7. Radialer Schwenkmotor nach Anspruch 6,
**dadurch gekennzeichnet, daß** die Ausnehmung im Gleitdichtring (23) aus mindestens einer axialen Nut (32) besteht und der Mitnehmer (31) an einem der Schenkel (21) des Rotorflügels (10) angeformt ist.

8. Radialer Schwenkmotor nach Anspruch 7,
**dadurch gekennzeichnet, daß** jeweils zwei axiale Nuten (32) paarweise angeordnet und jeweils beiden, mit Mitnehmer (31) versehenen, Schenkeln (21) eines Rotorflügels (10) zugeordnet sind.

9. Radialer Schwenkmotor nach Anspruch 1,
**dadurch gekennzeichnet, daß** der vom Gleitdichtring (23) abgedichtete radiale Dichtspalt (12) am Deckel (4) und am Gehäuse (3) aus durchgehenden Planflächen gebildet wird und die Deckel (4) und das Gehäuse (3) durch je ein Zentrierelement radial fixiert sind.

10. Radialer Schwenkmotor nach Anspruch 9,
**dadurch gekennzeichnet, daß** das Zentrierelement als ein Spannring (5) ausgebildet ist.

## Claims

1. Radial oscillating motor, consisting
- of a stator (1) with a housing (3) and covers (4) on both sides, wherein at least one stator vane (6) is disposed in the housing (3), and
- of a rotor (2) with an output shaft (7), which is mounted in the covers (4), and with the same number of rotor vanes (10), wherein
- the stator vane (6) and the rotor vane (10), in conjunction with the housing (3), the cylindrical part (9) of the output shaft (7) and the two covers (4), form at least one pressure space (13) and an outlet space (14)., and
- the pressure space (13) and the outlet space (14) are internally sealed by a frame sealing element (20), which is inserted in the stator and the rotor vane (10, 6), and
- the pressure space (13) and the outlet space (14) are externally and internally sealed by a sliding sealing ring (23) ,
**characterised in that** the annular sealing element consists of a sliding sealing ring (23) and a soft sealing ring, wherein the two are disposed side-by-side on a common axis and the soft sealing ring is disposed at sides of the pressure space (13) and the outlet space (14).

2. Radial oscillating motor according to Claim 1, **characterised in that** the soft sealing ring is a diagonal sealing ring (28), which is aligned by way of a sealing part with a sealing gap (29), which faces the pressure space (13), and by way of the other sealing part with a sealing gap (30), which is remote from the pressure space (13).

3. Radial oscillating motor according to Claim 2, **characterised in that** the sliding sealing ring (23) has a recess which is formed as an installation space (27) for the diagonal sealing ring (28).

4. Radial oscillating motor according to Claim 3, **characterised in that** the sliding sealing ring (23) is dimensioned such that the radial extent of the slide and sealing face at the sealing gap (24) is greater than the axial extent of the sealing face at the sealing gap (25).

5. Radial oscillating motor according to Claim 4, **characterised in that** the sliding sealing ring (23) and the rotor (2) have a common antitwist mechanism.

6. Radial oscillating motor according to Claim 5, **characterised in that** the antitwist mechanism is formed from at least one recess in the sliding sealing ring (23) and from a dog (31) at the rotor vane (10), and the recess and the dog (31) are engaged with one another.

7. Radial oscillating motor according to Claim 6, **characterised in that** the recess in the sliding sealing ring (23) consists of at least one axial slot (32), and the dog (31) is moulded onto one of the side pieces (21) of the rotor vane (10).

8. Radial oscillating motor according to Claim 7, **characterised in that** two axial slots (32) are in each case disposed in pairs and each two, provided with dogs (31), are associated with side pieces (21) of a rotor vane (10).

9. Radial oscillating motor according to Claim 1, **characterised in that** the radial sealing gap (12), which is sealed by the sliding sealing ring (23), at the cover (4) and at the housing (3) is formed from continuous plane faces, and the covers (4) and the housing (3) are radially fixed by a respective centring element.

10. Radial oscillating motor according to Claim 9, **characterised in that** the centring element is formed as a clamping ring (5).

## Revendications

1. Moteur oscillant radial constitué par
- un stator (1) comprenant un corps (3) et des couvercles (4) des deux côtés, au moins une palette de stator (6) étant disposée dans le corps (3) et
- un rotor (2) possédant un arbre de sortie (7) tourillonné dans les couvercles (4) et des palettes de rotor (10) en nombre égal, dans lequel
- la palette de stator (6) et la palette de rotor (10) forment, en combinaison avec le corps (3), la partie cylindrique (9) de l'arbre d'entraînement (7) et les deux couvercles (4), au moins une chambre de pression (13) et une chambre d'écoulement (14) et
- la chambre de pression (13) et la chambre d'écoulement (14) étant fermées à joint étanche vers l'intérieur par un élément d'étanchéité en forme de cadre (20) encastré dans la palette de stator et la palette de rotor (10, 6) et
- la chambre de pression (13) et la chambre d'écoulement (14) étant fermées à joint étanche vers l'extérieur et vers l'intérieur par une bague d'étanchéité glissante (23),
**caractérisé en ce que** l'élément d'étanchéité annulaire est composé d'une bague d'étanchéité glissante (23) et d'une bague d'étanchéité souple, les deux étant disposées l'une à côté de l'autre sur un axe commun et la bague d'étanchéité souple étant disposée sur les côtés de la chambre de pression (13) et de la chambre d'écoulement (14).

2. Moteur oscillant radial selon la revendication 1,
**caractérisé en ce que** la bague d'étanchéité souple est une bague d'étanchéité diagonale (28) qui est alignée, par une partie d'étanchéité, sur une fente d'étanchéité (29) dirigée vers la chambre de pression (13) et, par l'autre partie d'étanchéité, sur une fente d'étanchéité (30) qui est dirigée à l'opposé de la chambre de pression (13).

3. Moteur oscillant radial selon la revendication 2,
**caractérisé en ce que** la bague d'étanchéité glissante (23) possède un évidement qui constitue une chambre de logement (27) pour la bague d'étanchéité diagonale (28).

4. Moteur oscillant radial selon la revendication 3,
**caractérisé en ce que** la bague d'étanchéité glissante (23) est dimensionnée de manière que l'extension radiale de la surface de glissement et d'étanchéité située au droit de la fente d'étanchéité (24) soit plus grande que l'extension axiale de la surface d'étanchéité située au droit de la fente d'étanchéité (25).

5. Moteur oscillant radial selon la revendication 4,
**caractérisé en ce que** la bague d'étanchéité glissante (23) et le rotor (2) possèdent un blocage anti-rotation commun.

6. Moteur oscillant radial selon la revendication 5,
**caractérisé en ce que** le blocage anti-rotation est formé d'au moins un évidement ménagé dans la bague d'étanchéité glissante (23) et d'un taquet d'entraînement (31) prévu sur la palette de rotor (10), et l'évidement et le taquet d'entraînement (31) sont en prise entre eux.

7. Moteur oscillant radial selon la revendication 6,
**caractérisé en ce que** l'évidement ménagé dans la bague d'étanchéité glissante (23) est formé d'au moins une rainure axiale (32) et le taquet d'entraînement (31) est venu de matière sur une des branches (21) de la palette de rotor (10).

8. Moteur oscillant radial selon la revendication 7,
**caractérisé en ce qu'**à chaque fois, deux rainures axiales (32) sont disposées en une paire et sont associées respectivement aux deux branches (21) d'une palette de rotor (10), munies de taquets d'entraînement (31).

9. Moteur oscillant radial selon la revendication 1,
**caractérisé en ce que** la fente d'étanchéité radiale (12) présente au droit du couvercle (4) et du corps (3), qui est fermée à joint étanche par la bague d'étanchéité glissante (23), est formée par des surfaces planes ininterrompues et les couvercles (4) et le corps (3) sont immobilisés radialement chacun par un élément de centrage.

10. Moteur oscillant radial selon la revendication 9,
**caractérisé en ce que** l'élément de centrage est constitué par un collier de serrage (5).
